# EUROPÄISCHE PATENTANMELDUNG

(11) **EP 4 804 068 A1**
(43) Veröffentlichungstag der Anmeldung: **09.09.2026**
(21) Anmeldenummer: 26156954.5
(22) Anmeldetag: 06.02.2026
(51) Int. Cl.: G06F 21/60, H04L 9/40

(54) **VERFAHREN ZUR SICHEREN SEPARATION VON MANDANTEN**

(30) Priorität: 07.03.2025 DE 102025108741
(71) Anmelder: secunet Security Networks Aktiengesellschaft, 45138 Essen (DE)
(72) Erfinder: Theil, Markus, 07557 Wolfsgefärth (DE); Pfeiffer, Michael, 95119 Naila (DE); Roßberg, Michael, 98693 Ilmenau (DE); Schäfer, Günter, 98693 Ilmenau (DE); Glaubitz, Christoph, 13086 Berlin (DE)
(74) Vertreter: Andrejewski - Honke Patent- und Rechtsanwälte Partnerschaft mbB

(57) **Zusammenfassung**

Bei einem Verfahren zur sicheren Separation von Mandanten innerhalb eines Rechnerverbunds (1) umfasst der Rechnerverbund (1) eine Mehrzahl an Einheiten (2a, 3a, 2b, 3b). Eine erste Einheit (2a) ist einem ersten Mandanten zugeordnet und Bestandteil eines ersten Teilnetzes (A) ist, wobei eine dritte Einheit (2b) einem zweiten Mandanten zugeordnet und Bestandteil eines zweiten Teilnetzes (B) ist. Wenigstens eine Datenverbindung (9, 10, 11, 14, 15, 16) liegt innerhalb des Rechnerverbunds (1) zwischen dem ersten Teilnetz (A) und dem zweiten Teilnetz (B) vor. Von der ersten Einheit (2a) des ersten Teilnetzes (A) ausgehende Datenströme sind mit einem Schlüssel teilnetzspezifisch verschlüsselt, wobei die erste Einheit (2a) eine Kryptokomponente (6) zur teilnetzspezifischen Verschlüsselung des ersten Teilnetzes (A) aufweist. Die erste Einheit (2a) umfasst eine innere Komponente (35), wobei die innere Komponente (35) hinsichtlich eines Datenflusses weiter innerhalb der ersten Einheit (2a) als die Kryptokomponente (6) angeordnet ist. Die Kryptokomponente (6) ist zum teilnetzspezifischen Verschlüsseln von einem aus der inneren Komponente (35) ausgehenden Datenstrom und zum teilnetzspezifischen Entschlüsseln von einem in die innere Komponente (35) eingehenden Datenstrom ausgebildet.

## Beschreibung

Die Erfindung betrifft ein Verfahren, ein Computerprogramm und einen Rechnerverbund zur sicheren Separation von Mandanten. Die Erfindung betrifft ferner eine Verwendung des Computerprogramms bzw. des Rechnerverbunds.

Ein Verfahren bzw. ein Rechnerverbund bzw. eine Cloudlösung zur sicheren Separation von Mandanten ist aus der Praxis bekannt. Jedem Kunden bzw. Mandanten ist innerhalb des Rechnerverbunds ein eigenes Teilnetz zugeordnet, welches jeweils mehrere Einheiten aufweist. Die Einheiten beider Teilnetze sind bspw. über eine Spine-Leaf-Architektur miteinander verbunden, so dass alle Einheiten beider Teilnetze jeweils mit allen anderen Einheiten beider Teilnetze verbunden sind. Diese hohe Vernetzungsdichte erlaubt eine große Flexibilität bzw. Anpassungsfähigkeit an die Kapazitätsanforderungen durch die Mandanten. So können bei kurzfristigem Bedarf sehr schnell weitere Einheiten dem anfordernden Mandanten zugeordnet werden, da diese bereits physisch mit den schon dem Mandanten zugeordneten Einheiten verbunden sind. Die hierdurch verschobenen Datenströme können durch die hohe Vernetzungsdichte gut aufgefangen werden.

Die hohe Vernetzungsdichte bringt es mit sich, dass die Einheiten der Mandanten des aus der Praxis bekannten Rechnerverbunds physisch miteinander verbunden sind. Manche Mandanten verlangen allerdings einen sehr hohen Sicherheitsstandard hinsichtlich der Separation der Teilnetze innerhalb eines Rechnerverbunds, so dass für diese Mandanten der aus der Praxis bekannte Rechnerverbund mit den physisch verbundenen Teilnetzen nicht in Betracht kommt und mithin Cloud-Lösungen ausscheiden. Bei diesen Mandanten handelt es sich beispielsweise um Behörden aus dem Sicherheitsbereich, die auf entsprechende Sicherheitsniveaus angewiesen bzw. gehalten sind, ihrerseits Sicherheitsstandards einhalten zu müssen.

Unter den Begriff "Sicherheitsstandards" können beispielsweise Sicherheitsgrade bzw. Geheimhaltungsgrade wie " Verschlusssache - Nur für den Dienstgebrauch (VS-NfD)" und höhere Sicherheitsgrade bzw. Geheimhaltungsgrade subsumiert werden. Mit einem Geheimhaltungsgrad werden Verschlusssachen entsprechend ihrer Schutzbedürftigkeit bevorzugt von einer amtlichen Stelle oder auf deren Veranlassung eingestuft. Vorzugsweise wird jedes Objekt gemäß seiner Schutzwürdigkeit und Gefährdung einem Schutzgrad zugeordnet.

Verschlusssachen (kurz "VS" genannt) sind vorzugsweise im öffentlichen Interesse geheimhaltungsbedürftige Erkenntnisse, Gegenstände oder Tatsachen. Die Darstellungsform spielt dabei zweckmäßigerweise keine Rolle. Sowohl eine Fotokopie als auch eine technische Einrichtung oder das gesprochene Wort kann eine Verschlusssache darstellen. Die Einstufung wird mit Vorteil von einer Behörde je nach Geheimhaltungsbedürftigkeit eingestuft oder die Einstufung wird von ihr veranlasst. Beispiele von Geheimhaltungsgraden sind - insbesondere für die Bundesrepublik Deutschland- die folgenden Stufen:
- Verschlusssache - Nur für den Dienstgebrauch (VS-NfD),
- Verschlusssache - Vertraulich (VS-Vertraulich),
- Geheim,
- Streng geheim.

In der nachfolgenden Tabelle werden beispielhaft Geheimhaltungsgrade verglichen.

| | | | | |
|---|---|---|---|---|
| Bundesrepublik Deutschland | STRENG GEHEIM | GEHEIM | VS-VERTRAULICH | VS-NUR FÜR DEN DIENSTGEBRAUCH |
| Europäische Union - EU | TRES SECRET UE/EU TOP SECRET | SECRET UE/EU SECRET | CONFIDENTIEL UE/EU CONFIDENTIAL | RESTREINT UE/EU RESTRICTED |
| NATO | COSMIC TOP SECRET | NATO SECRET | NATO CONFIDENTIAL | NATO RESTRICTED |
| ESA | ESA TOP SECRET | ESA SECRET | ESA CONFIDENTIAL | ESA RESTRICTED |
| OCCAR | OCCAR TOP SECRET | OCCAR SECRET | OCCAR **CONFIDENTIAL** | OCCAR RESTRICTED |
| Eurocorps | EUROCOPRS TOP SECRET | EUROCORPS SECRET | EUROCORPS CONFIDENTIAL | EUROCORPS RESTRICTED |

Die NATO (North Atlantic Treaty Organization / "Nordatlantikvertrags-Organisation") ist ein Verteidigungsbündnis von europäischen und nordamerikanischen Mitgliedstaaten.

Die ESA (European Space Agency / Europäische Weltraumorganisation) ist eine internationale Organisation europäischer Staaten für die Koordinierung und den Betrieb gemeinsamer Raumfahrtaktivitäten.

OCCAR (Organisation Conjointe de Coopération en matière d'Armement / Organisation for Joint Armament Co-operation / Organisation für Gemeinsame Rüstungskooperation) ist eine internationale Organisation, deren Kerngeschäft das lebenslange Management komplexer, kooperativer Rüstungsprogramme ist.

Das Eurocorps im französischen Straßburg ist ein multinationales, voll einsatzfähiges und autonomes Hauptquartier der Rahmennationen Deutschland, Frankreich, Belgien, Spanien, Luxemburg und Polen, das allen Mitgliedsstaaten der EU und den NATO-assoziierten Staaten offensteht.

Bei der Gestaltung eines Rechnerverbunds bzw. eines Rechenzentrums ist zu berücksichtigen, dass ein einzelner Server bzw. eine einzelne Einheit des Rechnerverbunds einer hohen Arbeitslast ausgesetzt sein bzw. von sehr vielen Personen genutzt werden kann. Diese große und daher schwer zu überschauende Zahl an Personen führt dazu, dass ein einzelner Server - absichtlich oder unabsichtlich - durch eine dieser vielen Personen kompromittiert worden sein kann. In der Folge ist bei der Gestaltung der Sicherheitsarchitektur darauf zu achten, dass diese nicht von der Zuverlässigkeit eines Workloadservers bzw. einer Einheit eines Teilnetzes ausgehen darf.

Dies gilt auch und besonders im Bereich der Sicherheitsbehörden, die Angriffsziele professioneller ausländischer - mithin staatlich gesteuerter - Spionage sein können. So kann ein entsprechend erfahrener verdeckter Spion aufgrund seiner Zugriffsberechtigung als Mitarbeiter einer Sicherheitsbehörde bzw. Mandanten einen oder mehrere Trojaner auf einem Server in der Cloud platzieren. In der Folge kann es passieren, dass innerhalb des Rechnerverbunds das gesamte Teilnetz dieses Mandanten kompromittiert und nicht mehr vertrauenswürdig ist. Aus der Perspektive des Rechnerverbunds bzw. des Rechenzentrums bzw. des Cloudanbieters bedeutet dies, dass dem einzelnen Mandanten bzw. dem einzelnen Teilnetz nicht vertraut werden darf (Szenario "Zero Trust"). Die sichere Mandantentrennung ist daher eine wesentliche Voraussetzung für einen sicheren und wirtschaftlichen Betrieb für Cloud-Infrastruktur.

Aus der Praxis ist es daher bekannt, ein zu schützendes Teilnetz teilnetzspezifisch zu verschlüsseln. Hierzu werden die Teilnetze mit einem kryptographischen System ausgestattet, wobei jede Einheit eines Teilnetzes mit einem kryptographischen Geheimnis bzw. einem Schlüssel bzw. Schlüsselsatz ausgestattet wird. Hierdurch wird es Einheiten anderer Teilnetze erschwert, auf die verschlüsselte Kommunikation des zu schützenden Teilnetzes zuzugreifen.

Dennoch erscheint die teilnetzspezifische Verschlüsselung schon aufgrund der Evolution der Überwindungsmethoden verbesserungswürdig. Dies gilt insbesondere im Hinblick auf die Bedeutsamkeit der zu schützenden Teilnetze, die auch Staatsgeheimnisse enthalten können. Dementsprechend müssen - bezogen auf die zu schützenden Teilnetze der sicherheitsrelevanten Behörden mit Zugriff auf die Staatsgeheimnisse - professionelle Angreifer in Betracht gezogen werden, die auf praktisch beliebig umfangreiche Ressourcen zurückgreifen können.

So haben zahlreiche in den vergangenen Jahren entdeckte Sicherheitslücken und Angriffstechniken (z.B. Spectre, Meltdown, Row-Hammering, Hypervisor-Escapes, BIOS-Kompromittierung, etc.) die Anfälligkeit aktueller Rechnerverbünde bzw. Rechenzentren bzw. Rechensysteme aufgezeigt. Insbesondere sind die Rechensysteme bzw. deren Betreiber derzeit nicht imstande, für den Sicherheitsbedarf der erwähnten Sicherheitsbehörden eine angemessene Mandantentrennung - unabhängig von den in den Rechensystemen installierten Betriebssystemen und Anwendungen - auf eine praktikable bzw. einigermaßen effiziente Weise nachzuweisen.

Ein solcher Sicherheitsnachweis wäre allenfalls möglich, wenn die exakte Kombination aus Cloud-Stack, Betriebssystemen und darin ablaufenden Anwendungen einzeln und inklusive der Durchsicht des Quellcodes analysiert und auf diese Weise eine spezifische Sicherheitsbetrachtung anfertigt. Jede Änderung an den Anwendungen, Betriebssystemen oder Cloud-Stacks würde unter Umständen eine Neubewertung erforderlich machen. Die Sicherheitsnachweise würden somit in einem Aufwand resultieren, der fernab jeder Wirtschaftlichkeit läge. Derzeit existiert beispielsweise keine einzige Zulassung eines solchen Rechnerverbunds bzw. -systems bzw. -zentrums zur sicheren Separation von Mandanten durch das Bundesamt für Sicherheit in der Informationstechnik (BSI) für die Bundesrepublik Deutschland.

Der Erfindung liegt daher die Aufgabe zugrunde, unter Berücksichtigung der Möglichkeit der Kompromittierung einer Einheit eines Teilnetzes (Szenario "Zero Trust") die Sicherheit von Rechnerverbünden deutlich zu erhöhen, um eine besonders sichere Separation von Mandanten zu gewährleisten, ohne dabei die Flexibilität des Rechnerverbunds zur Bereitstellung von Kapazitäten nennenswert einzuschränken und vorzugsweise ohne dabei einen großen Aufwand zur Erbringung des Sicherheitsnachweises auszulösen.

Diese Aufgabe wird gelöst durch die Gegenstände gemäß der Ansprüche 1, 10, 11 und 12.

Der Erfindung liegt zunächst die Erkenntnis zugrunde, dass sicherheitsorientierte Mandanten - beispielsweise Sicherheitsbehörden - den "Schritt in die Cloud" bisher gemieden haben. Ursache hierfür war die nur bedingt gelöste sichere Separation von Mandanten innerhalb eines Rechnerverbunds, da selbst durch eine teilnetzspezifische Verschlüsselung noch Sicherheitslücken bestehen bzw. ein zu großer Aufwand zur Erbringung des Sicherheitsnachweises betrieben werden muss.

Es wurde gefunden, dass bei der in der Praxis bekannten teilnetzspezifischen Verschlüsselung zwar die Kommunikation geschützt ist. Allerdings sind die Einheiten des zu schützenden Teilnetzes aufgrund der physischen Verbindung mit Einheiten anderer Teilnetze grundsätzlich von Einheiten der anderen Teilnetze ansprechbar. In der Folge können die Einheiten anderer Teilnetze die Einheiten des zu schützenden Teilnetzes des aus der Praxis bekannten Rechnerverbunds ansprechen, mit einigem Aufwand kompromittieren und schließlich doch an schützenswerte Daten gelangen. In der Folge ist derzeit zur Erbringung des Sicherheitsnachweises ein sehr großer Aufwand erforderlich, der die Quellcode-Analyse des Cloud-Stacks, der Betriebssysteme und bis hin zu den einzelnen Anwendungen nach sich zieht.

Der Erfindung liegt insbesondere die Erkenntnis zugrunde, dass die Kryptokomponente beispielsweise in Form einer Netzwerkkarte und bevorzugt in Form einer DPU (Data Processing Unit) realisiert werden kann. Eine solche Schnittstelle umfasst eine klar definierte sowie relativ übersichtliche Menge an Hardware- und Software-Komponenten, so dass die überhaupt in Betracht kommenden Angriffsmöglichkeiten ebenso übersichtlich sind. Hierdurch wird die Angriffsoberfläche gegenüber einer herkömmlichen Einheit, deren kryptographische Komponente weiter im Inneren der Einheit angeordnet ist, deutlich verringert. In der Folge lassen sich Schnittstellen - etwa in Form von Netzwerkkarten bzw. DPUs - kryptographisch besonders gut bzw. zuverlässig schützen.

Es wurde gefunden, dass ein kompromittierter Server eines Mandanten zwar Server oder Kommunikationsbeziehungen zwischen Servern anderer Mandanten angreifen kann. Allerdings kann durch die Kryptokomponenten sämtliche direkte Kommunikation zwischen Servern unterbunden werden, so dass sämtlicher Datenverkehr nur über die Kryptokomponenten erfolgt. Damit kann eine praktisch unumgehbare mandantenspezifische Verschlüsselung und Integritätssicherung sämtlichen Datenverkehrs erreicht und somit eine sichere Trennung der Mandanten durchgesetzt werden.

Der Erfindung liegt die Erkenntnis zugrunde, dass durch den erfindungsgemäßen Einsatz der Kryptokomponente eine umfangreiche Quellcode-Analyse der Anwendungen auf den Einheiten bzw. Servern nicht mehr erforderlich ist. Ebenso entfällt die Quellcode-Analyse der Betriebssysteme der Server bzw. Einheiten. Auf diese Weise kann die für die sichere Mandantentrennung erforderliche *Trusted Computing Base* (die Menge der Komponenten, denen zur Erreichung der Mandantentrennung unbedingt vertraut werden muss) möglichst klein gehalten und der Aufwand zur Erbringung des Sicherheitsnachweises für Anwendungen von Sicherheitsbehörden stark verringert werden. Zu der *Trusted Computing Base* gehört - bezogen auf eine Einheit - somit die Kryptokomponente, nicht aber das Mainboard, die Festplatten, der Arbeitsspeicher und alle weiteren Komponenten der Einheit.

Damit stellt die Kryptokomponente einer Einheit einen Vertrauensanker dar, der sich mit einem gut gesicherten Burgtor vergleichen lässt. Sämtlicher Verkehr wird durch das "Burgtor" gezwungen, welches sich mit einem verhältnismäßig geringen Aufwand überwachen lässt. In der Folge kann eine sichere Mandantentrennung für das erforderliche Niveau von Sicherheitsbehörden selbst dann auf eine wirtschaftliche Weise gewährleistet werden, wenn mehrere Einheiten eines Teilnetzes als kompromittiert angenommen werden. Die eingangs genannte Aufgabe wurde hierdurch gelöst.

Es ist sehr bevorzugt, dass die Kryptokomponente einen Speicher und/oder einen Prozessor und/oder ein der Kryptokomponente zugeordnetes Betriebssystem umfasst. Dies bewirkt, dass die Kryptokomponente unabhängig von der ersten Einheit arbeiten kann, sodass Kompromittierungsversuche von der ersten Einheit oder von anderen Rechnern unterbunden werden können.

Der Prozessor der Kryptokomponente umfasst zweckmäßigerweise wenigstens einen Prozessorkern und vorzugsweise mehrere - insbesondere wenigstens zwei bzw. vier bzw. sechs bzw. acht - Prozessorkerne. Dies erlaubt entsprechend viele gleichzeitig ablaufende Rechenoperationen, was bei Einheiten innerhalb von Rechnerverbünden und insbesondere von Servern von Vorteil ist. Es ist zweckmäßig, dass die Kryptokomponente wenigstens einen Dauerspeicher und/oder wenigstens einen Arbeitsspeicher umfasst. Mit Vorteil ist das Betriebssystem auf dem Speicher bzw. dem Dauerspeicher gespeichert. Zweckmäßigerweise ist die Kryptokomponente ausgebildet, dass der Prozessor das auf dem Speicher bzw. Dauerspeicher gespeicherte Betriebssystem ausführt. Der Prozessor ist vorzugsweise ein ARM-Prozessor (Advanced RISC Machines). Hierdurch ist die Kryptokomponente gut gegenüber Kompromittierungsversuchen geschützt.

Mit Vorteil ist eine Kryptosoftware auf dem Speicher bzw. Dauerspeicher der Kryptokomponente gespeichert. Die Kryptosoftware umfasst zweckmäßigerweise das Programm HEAT (High Speed Encryption Acceleration Track) der Firma secunet Security Networks Aktiengesellschaft. Es ist sehr bevorzugt, dass die Kryptosoftware ausgebildet ist, ein Mehrkern-Protokoll für kryptographische Rechenoperationen durchzuführen. Hierdurch ist die kryptographische Software an den bevorzugten Prozessor mit einer Mehrzahl an Prozessorkernen angepasst und erlaubt eine besonders effiziente kryptographische Behandlung von parallel verarbeiteten Datenströmen.

Es ist besonders bevorzugt, dass die Kryptokomponente als Data Processing Unit (DPU) ausgebildet ist. Die Kryptokomponente bzw. die DPU ist beispielsweise ein Produkt der Marke BlueField von NVIDIA. Gemäß einer sehr bevorzugten Ausführungsform ist die Kryptokomponente ausgebildet, autonom gegenüber der inneren Komponente bzw. anderen Komponenten der ersten Einheit zu arbeiten. Dies bewirkt, dass die erste Einheit nicht ohne weiteres auf die Kryptokomponente zugreifen kann, sodass auf diese Weise Manipulationsversuche der Kryptokomponente unterbunden werden können. Vorzugsweise ist die Kryptokomponente ausgebildet, dass der Prozessor der Kryptokomponente - bevorzugt anhand des Betriebssystems bzw. der kryptographischen Software der Kryptokomponente - entscheidet, welche Daten bzw. Datenströme bzw. Datenpakete bzw. Datenframes die Kryptokomponente passieren bzw. welche nicht.

Vorzugsweise umfasst die Kryptokomponente bzw. der Speicher bzw. der Dauerspeicher bzw. der Arbeitsspeicher der Kryptokomponente den Schlüssel für die teilnetzspezifische Verschlüsselung des ersten Teilnetzes. Dies bewirkt, dass die Kryptokomponente das kryptographische Geheimnis des Teilnetzes enthält. Dies hat zur Folge, dass vor allem die Kryptokomponente eines besonderen Schutzes bedarf. Dies wiederum hat zur Folge, dass aufgrund des übersichtlichen Aufbaus der Kryptokomponente dieselbige gut zu überwachen und zu schützen ist. Insbesondere führt dies dazu, dass die Einheiten selbst nicht überwacht bzw. geschützt werden müssen, sodass nur ein Bruchteil des infrage kommenden Quellcodes überblickt werden muss.

Es ist von besonderem Vorteil, dass die Kryptokomponente die einzige Route darstellt, über die die erste Einheit von dem zweiten Teilnetz bzw. der zweiten Einheit bzw. der dritten Einheit ansprechbar ist. Dies bewirkt, dass Umgehungspfade verhindert werden, sodass die Manipulationsmöglichkeiten verringert werden. Insbesondere wird hierdurch die gesamte Kommunikation mit der ersten Einheit durch die Kryptokomponente der ersten Einheit gezwungen. Es ist bevorzugt, dass alle anderen Kommunikationspfade der ersten Einheit geschlossen sind und vorzugsweise per Softwarebefehl deaktiviert und/oder physikalisch verplombt und/oder physikalisch nicht verbunden sind.

Besonders vorzugsweise umfasst die Kryptokomponente wenigstens eine Außenschnittstelle und/oder wenigstens eine Innenschnittstelle. Zweckmäßigerweise ist die Außenschnittstelle eine Netzwerkschnittstelle. Mit Vorteil ist die Innenschnittstelle zur Verbindung der Kryptokomponente mit einer Platine ausgebildet. Die Innenschnittstelle ist bevorzugt als PCI-Schnittstelle und besonders vorzugsweise als PCI-Express-Schnittstelle ausgebildet. Die PCI-Schnittstelle ist vorzugsweise als männliches Steckelement ausgebildet. Dies erlaubt eine einfache Nachrüstung der ersten Einheit bzw. der Einheiten. Hierdurch kann die Kryptokomponente direkt an die innere Komponente bzw. an ein/das Mainboard der ersten Einheit angeschlossen werden und dient nach außen hin als Verbindungselement zur Verbindung mit einer/der Verbindungstruktur des Rechnerverbunds. Die Außenschnittstelle bzw. Netzwerkschnittstelle ist vorzugsweise eine kabelgebundene Netzwerkschnittstelle und insbesondere eine Ethernet-Netzwerkschnittstelle. Die Außenschnittstelle bzw. Netzwerkschnittstelle kann eine InfiniBand-Schnittstelle sein.

Die Kryptokomponente ist vorzugsweise ausgebildet und angeordnet, dass ein Datenstrom von der inneren Komponente der ersten Einheit zu der Verbindungsstruktur bzw. zu der zweiten Einheit bzw. zu der dritten Einheit zunächst die Innenschnittstelle und danach die Außenschnittstelle passiert. Die Kryptokomponente ist mit Vorteil ausgebildet und angeordnet, dass ein Datenstrom von der Verbindungsstruktur bzw. der zweiten Einheit bzw. der dritten Einheit zu der inneren Komponente der ersten Einheit zu zunächst die Außenschnittstelle und danach die Innenschnittstelle passiert.

Es ist besonders von Vorteil, wenn der Schlüssel des ersten Teilnetzes symmetrisch ist. Dies erlaubt die gleichzeitige Verteilung ein- und desselben Schlüssels innerhalb eines Teilnetzes, woraufhin alle Einheiten des ersten Teilnetzes miteinander verschlüsselt kommunizieren können. Zweckmäßigerweise wird der Schlüssel - vorzugsweise über einen Tunnel - an die erste Einheit und/oder an die zweite Einheit und/oder an ein/das Kryptogate verteilt. Mit Vorteil ist der Tunnel zur Verteilung des Schlüssels verschlüsselt. Es ist besonders bevorzugt, dass der Schlüssel des ersten Teilnetzes - insbesondere in regelmäßigen Abständen - wiederholt geändert und verteilt wird. Dies erlaubt eine teilnetzweite, aber sichere Kommunikation.

Gemäß einer sehr bevorzugten Ausführungsform weist der Rechnerverbund wenigstens ein Kryptogate auf, wobei das wenigstens eine Kryptogate zwischen der ersten Einheit und einem externen Netzwerk angeordnet ist. Dies erlaubt die Anbindung eines Teilnetzes an ein externes Netz bzw. an das Internet. Zweckmäßigerweise umfasst das Kryptogate eine Kryptokomponente. Die Kryptokomponente des Kryptogates ist vorteilhafterweise einer Innenseite des Kryptogates zugeordnet. Die Kryptokomponente des Kryptogates kann hinsichtlich Hardware und/oder Software und/oder Funktion teilweise oder vollständig identisch wie die Kryptokomponente der ersten Einheit aufgebaut sein. Die Kryptokomponente des Kryptogates bzw. die Innenseite des Kryptogates ist mit Vorteil an die Verbindungstruktur des Rechnerverbunds bzw. an die erste Einheit bzw. an die zweite Einheit bzw. an die dritte Einheit bzw. an die vierte Einheit angeschlossen.

Vorzugsweise umfasst das Kryptogate eine Netzwerkschnittstelle. Die Netzwerkschnittstelle ist bevorzugt einer Außenseite des Kryptogates zugeordnet. Vorzugsweise ist die Netzwerkschnittstelle des Kryptogates mit der/einer Abschlusseinheit des Rechnerverbunds verbunden. Die Abschlusseinheit kann eine Firewall und/oder ein VPN-Gateway und/oder einen Router umfassen. Zweckmäßigerweise ist die Abschlusseinheit zwischen einem/dem externen Netzwerk und dem Kryptogate angeordnet. Mit Vorteil ist das Kryptogate zwischen der Abschlusseinheit und der Verbindungstruktur des Rechnerverbunds bzw. der ersten Einheit bzw. der zweiten Einheit bzw. der dritten Einheit bzw. der vierten Einheit angeordnet. Die Netzwerkschnittstelle des Kryptogates ist vorzugsweise zwischen einer/der Abschlusseinheit und der Kryptokomponente des Kryptogates angeordnet. Die Kryptokomponente des Kryptogates ist vorzugsweise zwischen der Netzwerkschnittstelle des Kryptogates und der Verbindungstruktur des Rechnerverbunds bzw. der ersten Einheit bzw. der zweiten Einheit bzw. der dritten Einheit bzw. der vierten Einheit angeordnet.

Es ist bevorzugt, dass das Kryptogate bzw. die Kryptokomponente des Kryptogates ausgebildet ist, weiter in den Rechnerverbund einfließende Datenströme bzw. in Richtung der ersten Einheit bzw. der zweiten Einheit fließende Datenströme teilnetzspezifisch zu verschlüsseln. Es ist von Vorteil, dass das Kryptogate bzw. die Kryptokomponente des Kryptogates ausgebildet ist, aus dem Rechnerverbund herausfließende Datenströme bzw. in Richtung der Abschlusseinheit fließende Datenströme teilnetzspezifisch zu entschlüsseln.

Es ist bevorzugt, dass der Rechnerverbund eine Kryptosteuerung umfasst. Vorzugsweise ist die Kryptosteuerung ausgebildet, die Kryptokomponente der ersten Einheit bzw. der zweiten Einheit bzw. der dritten Einheit bzw. des Kryptogates zu authentifizieren. Mit Vorteil ist die Kryptosteuerung ausgebildet, ein Teilnetz zu initialisieren. Dies bewirkt eine zentrale Kontrolle der Kryptokomponenten bzw. der gesamten Sicherheitsarchitektur. Vorzugsweise ist die Kryptosteuerung ausgebildet, dem ersten Teilnetz eine Reserveeinheit zuzuordnen. Vorzugsweise ist die Kryptosteuerung ausgebildet, Befehle an die Kryptokomponente bzw. an die Kryptokomponenten der Einheiten bzw. der Kryptogates zu senden. Die Befehle können einen Betrieb der Kryptokomponente bzw. Kryptokomponenten und/oder eine Aktualisierung betreffen. Die Kryptosteuerung ist mit Vorteil ausgebildet, zur Initialisierung eines Teilnetzes oder zur Hinzufügung einer Reserveeinheit zu einem bereits bestehenden Teilnetz eine Reserveeinheit bzw. alle Speicher der Reserveeinheit zu bereinigen und vorteilhafterweise die Reserveeinheit zu booten. Es ist zweckmäßig, dass die Kryptosteuerung ein Programmpaket auf der Reserveeinheit ausrollt.

Die eingangs genannte Aufgabe wird gelöst durch ein Computerprogramm zur sicheren Separation von Mandanten innerhalb eines Rechnerverbunds, insbesondere zur Durchführung eines erfindungsgemäßen Verfahrens, wobei das Computerprogramm ausgebildet ist, innerhalb eines Rechnerverbunds umfassend eine Mehrzahl an Einheiten ausgeführt zu werden und zu definieren, dass eine erste Einheit umfassend eine innere Komponente - und vorzugsweise eine zweite Einheit - einem ersten Mandanten zugeordnet ist/sind und Bestandteil eines ersten Teilnetzes ist/sind,
wobei das Computerprogramm ausgebildet ist, von der ersten Einheit des ersten Teilnetzes ausgehende Datenströme mit einem Schlüssel teilnetzspezifisch zu verschlüsseln, so dass eine dritte Einheit eines zweiten Teilnetzes die teilnetzspezifisch verschlüsselten Datenströme des ersten Teilnetzes ohne den Schlüssel des ersten Teilnetzes nicht entschlüsseln kann, wobei das Computerprogramm ausgebildet ist, eine Komponente der ersten Einheit als Kryptokomponente zur teilnetzspezifischen Verschlüsselung des ersten Teilnetzes zu bestimmen,
dadurch gekennzeichnet, dass
das Computerprogramm ausgebildet ist, die Kryptokomponente zu definieren, dass eine innere Komponente der ersten Einheit hinsichtlich eines Datenflusses weiter innerhalb der ersten Einheit als die Kryptokomponente angeordnet ist, so dass die Kryptokomponente zum teilnetzspezifischen Verschlüsseln von einem aus der inneren Komponente ausgehenden Datenstrom und zum teilnetzspezifischen Entschlüsseln von einem in die innere Komponente eingehenden Datenstrom ausgebildet ist.

Die eingangs genannte Aufgabe wird gelöst durch einen Rechnerverbund zur sicheren Separation von Mandanten innerhalb des Rechnerverbunds, insbesondere zur Durchführung eines erfindungsgemäßen Verfahrens, insbesondere umfassend ein erfindungsgemäßes Computerprogramm, wobei der Rechnerverbund eine Mehrzahl an Einheiten umfasst, wobei eine erste Einheit - und vorzugsweise eine zweite Einheit - einem ersten Mandanten zugeordnet ist/sind und Bestandteil eines ersten Teilnetzes ist/sind, wobei eine dritte Einheit einem zweiten Mandanten zugeordnet ist und Bestandteil eines zweiten Teilnetzes ist, wobei wenigstens eine Datenverbindung innerhalb des Rechnerverbunds zwischen dem ersten Teilnetz und dem zweiten Teilnetz vorliegt,
wobei der Rechnerverbund ausgebildet ist, von der ersten Einheit des ersten Teilnetzes ausgehende Datenströme mit einem Schlüssel teilnetzspezifisch zu verschlüsseln, so dass die dritte Einheit des zweiten Teilnetzes die teilnetzspezifisch verschlüsselten Datenströme des ersten Teilnetzes ohne den Schlüssel des ersten Teilnetzes nicht entschlüsseln kann, wobei die erste Einheit eine Kryptokomponente zur teilnetzspezifischen Verschlüsselung des ersten Teilnetzes aufweist, wobei die erste Einheit eine innere Komponente umfasst,
dadurch gekennzeichnet, dass
die innere Komponente hinsichtlich eines Datenflusses weiter innerhalb der ersten Einheit als die Kryptokomponente angeordnet ist, wobei die Kryptokomponente zum teilnetzspezifischen Verschlüsseln von einem aus der inneren Komponente ausgehenden Datenstrom und zum teilnetzspezifischen Entschlüsseln von einem in die innere Komponente eingehenden Datenstrom ausgebildet ist.

Die eingangs genannte Aufgabe wird gelöst durch die Verwendung eines erfindungsgemäßen Computerprogramms bzw. eines erfindungsgemäßen Rechnerverbunds innerhalb eines Rechenzentrums. Es ist möglich, dass der Rechnerverbund ein Bestandteil eines Rechenzentrums ist. Es ist möglich, dass der Rechnerverbund ein Rechenzentrum ist.

Die Erfindung wird nachfolgend anhand von zwei Ausführungsbeispielen und drei Figuren näher erläutert. Es zeigen in schematischer Darstellung
- Fig. 1: ein Blockdiagramm eines Rechnerverbunds eines ersten Ausführungsbeispiels der Erfindung,
- Fig. 2: ein Blockdiagramm eines Rechnerverbunds eines zweiten Ausführungsbeispiels der Erfindung und
- Fig. 3: ein Blockdiagramm einer erfindungsgemäßen Kryptokomponente.

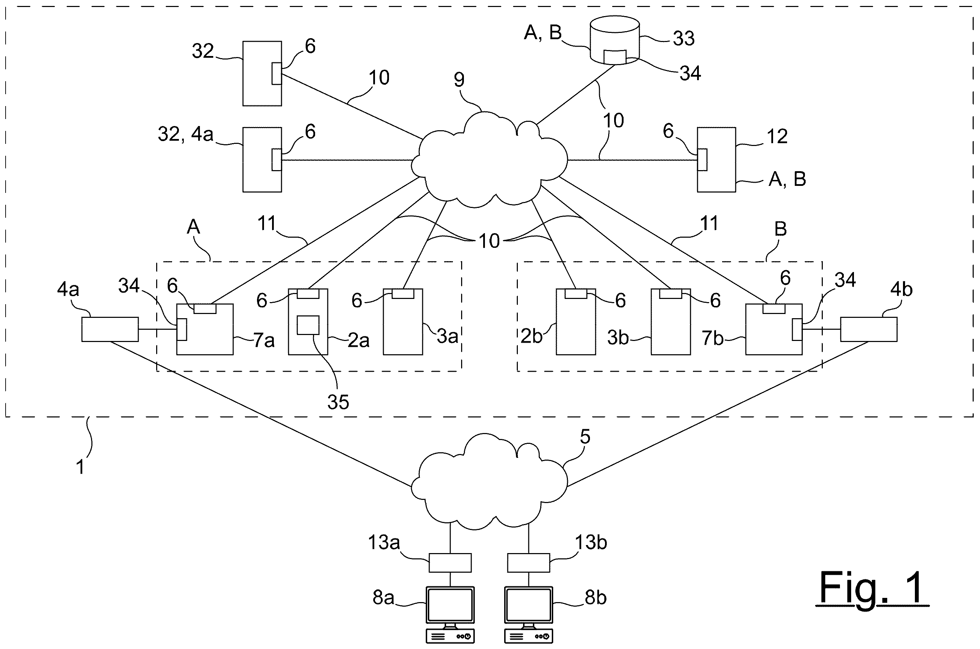

In Fig. 1 ist ein erfindungsgemäßer Rechnerverbund 1 mithilfe einer gestrichelten Linie symbolisiert. Der Rechnerverbund 1 kann ein Rechenzentrum bzw. ein Bestandteil eines Rechenzentrums sein. Außerhalb des Rechnerverbunds 1 liegt ein externes Netzwerk 5 bzw. das Internet. Der Rechnerverbund 1 des ersten Ausführungsbeispiels nach Fig. 1 umfasst zwei Abschlusseinheiten 4a, 4b, welche den Rechnerverbund 1 gegenüber dem externen Netzwerk 5 abgrenzen.

Der Rechnerverbund 1 zeichnet sich vorzugsweise durch besonders starke Sicherheitsmechanismen aus und bietet seine Dienste beispielsweise Sicherheitsunternehmen und/oder Sicherheitsbehörden an. Insbesondere ist der Rechnerverbund 1 dazu ausgelegt, eine Mehrzahl an Mandanten zu bedienen. In diesem Ausführungsbeispiel ist einem ersten Mandanten ein erstes Teilnetz A zugeordnet. Vorzugsweise ist einem zweiten Mandanten ein zweites Teilnetz B zugewiesen. In der Folge müssen die Teilnetze A, B innerhalb des Rechnerverbunds 1 strikt voneinander getrennt sein, so dass eine Kompromittierung von einem der beiden Teilnetze A, B nicht auf das jeweils andere Teilnetz B, A übergreifen kann.

Der Rechnerverbund 1 umfasst vorzugsweise eine in Fig. 1 nicht näher dargestellte Verbindungsstruktur 9, an welche zweckmäßigerweise die Teilnetze A, B angeschlossen sind. Mit Vorteil umfasst der Rechnerverbund 1 wenigstens eine Reserveeinheit 32 und vorzugsweise mehrere Reserveeinheiten 32, welche weder dem ersten Teilnetz A noch dem zweiten Teilnetz B zugeordnet ist/sind. Die wenigstens eine Reserveeinheit 32 ist vorzugsweise über eine Endpunktverbindung 10 mit der Verbindungstruktur 9 verbunden. Die Endpunktverbindung 10 ist vorzugsweise als Kabel, insbesondere als Ethernet-Kabel, ausgebildet. Das Bereithalten von Reserveeinheiten 32 erlaubt es dem Rechnerverbund 1, bei steigenden Kapazitätsanforderungen des ersten Teilnetzes A und/oder des zweiten Teilnetzes B zu reagieren, sodass die wenigstens eine Reserveeinheit 32 dem ersten Teilnetz A oder dem zweiten Teilnetz B kurzfristig zugeordnet werden kann.

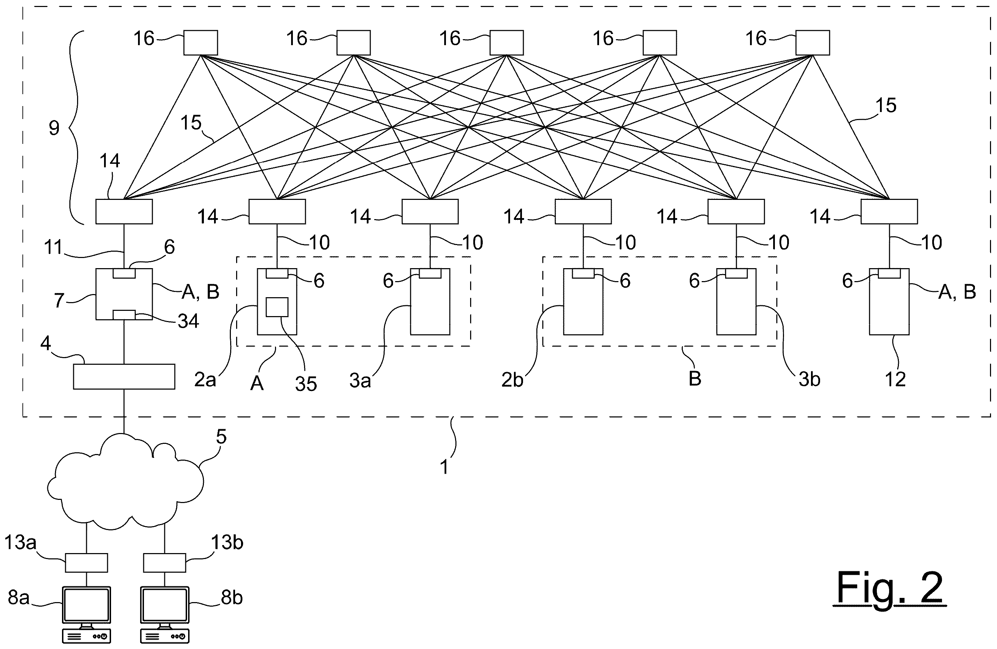

Da die Kapazitätsanforderungen häufig kurzfristiger Natur sind, ist die wenigstens eine Reserveeinheit 32 permanent mit der Verbindungstruktur 9 verbunden. Die Verbindungstruktur 9 wird häufig auch als "fabric" bezeichnet und kann insbesondere als *Spine-Leaf-Architektur* ausgestaltet sein, s. Fig. 2. Vorzugsweise umfasst der Rechnerverbund 1 wenigstens eine Kryptosteuerung 12. Es ist von Vorteil, dass die Kryptosteuerung 12 steuernde Funktionen für das erste Teilnetz A und/oder das zweite Teilnetz B übernimmt. Im vorliegenden Ausführungsbeispiel ist die Kryptosteuerung 12 sowohl für das erste Teilnetz A als auch für das zweite Teilnetz B zuständig.

Das erste Teilnetz A umfasst eine erste Einheit 2a. Die erste Einheit 2a ist bevorzugt als zentrale Recheneinheit bzw. Workloadserver ausgebildet und umfasst eine Kryptokomponente 6 und eine innere Komponente 35. Die erste Einheit 2a ist bevorzugt über eine Endpunktverbindung 10 mit der Verbindungsstruktur 9 verbunden. Mit Vorteil ist die der ersten Einheit 2a zugeordnete Endpunktverbindung 10 an die Kryptokomponente 6 der ersten Einheit 2a angeschlossen. Vorzugsweise umfasst das erste Teilnetz A eine zweite Einheit 3a, welche insbesondere als Recheneinheit bzw. Server bzw. Workloadserver ausgebildet ist. Bevorzugt umfasst die zweite Einheit 3a eine Kryptokomponente 6 und/oder eine innere Komponente 35. Es ist bevorzugt, dass die Kryptokomponente 6 der zweiten Einheit 3a über eine Endpunktverbindung 10 mit der Verbindungstruktur 9 verbunden ist.

Besonders vorzugsweise umfasst der Rechnerverbund 1 bzw. das erste Teilnetz A dieses Ausgangsbeispiels ein erstes Kryptogate 7a. Vorzugsweise umfasst das erste Kryptogate 7a eine Kryptokomponente 6. Besonders bevorzugt umfasst das erste Kryptogate 7a eine Netzwerkschnittstelle 34. Mit Vorteil ist die Kryptokomponente 6 des ersten Kryptogates 7a über eine Ausgangsverbindung 11 an die Verbindungstruktur 9 angeschlossen.

Mit Vorteil umfasst der Rechnerverbund 1 des ersten Ausführungsbeispiels eine erste Abschlusseinheit 4a. Es ist möglich, dass die erste Abschlusseinheit 4a ausschließlich dem ersten Teilnetz A zugeordnet ist. Es ist sehr bevorzugt, dass die Abschlusseinheit 4a mit der Netzwerkschnittstelle 34 des ersten Kryptogates 7a verbunden ist. Vorzugsweise ist die erste Abschlusseinheit 4a zwischen dem ersten Kryptogate 7a und dem externen Netzwerk 5 angeordnet. Zweckmäßigerweise ist das erste Kryptogate 7a zwischen der ersten Abschlusseinheit 4a und der Verbindungsstruktur 9 bzw. der Ausgangsverbindung 11 bzw. der ersten Einheit 2a bzw. der zweiten Einheit 3a angeordnet.

Es ist möglich, dass die erste Abschlusseinheit 4a eine Firewall und/oder ein VPN-Gateway und/oder einen Zugangsrouter umfasst. Zweckmäßigerweise ist die Firewall und/oder das VPN-Gateway zwischen dem Zugangsrouter und dem ersten Kryptogate 7a befindlich. Es ist möglich, dass die Firewall zwischen dem VPN-Gateway und dem ersten Kryptogate 7a angeordnet ist. Es ist möglich, dass die Firewall und das VPN-Gateway parallel zwischen den Zugangsrouter und das Kryptogate 7a geschaltet sind.

Das zweite Teilnetz B umfasst vorzugsweise eine dritte Einheit 2b, eine vierte Einheit 3b und/oder ein zweites Kryptogate 7b. In dem ersten Ausführungsbeispiel ist das zweite Teilnetz B analog zum ersten Teilnetz A ausgebildet. Der Rechnerverbund 1 umfasst zweckmäßigerweise eine zweite Abschlusseinheit 4b, welche mit dem zweiten Teilnetz B und dem externen Netzwerk 5 analog zum ersten Teilnetz A verschaltet ist.

Der erste Mandant des ersten Ausführungsbeispiels nutzt Räumlichkeiten, die entfernt vom Rechnerverbund 1 befindlich sind. In den Räumlichkeiten des ersten Mandanten befindet sich zweckmäßigerweise eine erste externe Abschlusseinheit 13a. Die erste, externe Abschlusseinheit 13a umfasst vorzugsweise einen Zugangsrouter, ein VPN-Gateway und/oder eine Firewall. Zweckmäßigerweise ist eine erste externe Recheneinheit 8a an die erste externe Abschlusseinheit 13a angeschlossen. Die erste externe Recheneinheit 8a kann ein Arbeitsrechner eines Mitarbeiters des ersten Mandanten oder ein Server des ersten Mandanten sein.

Der zweite Mandant besitzt zweckmäßigerweise ebenfalls Räumlichkeiten fernab des Rechnerverbunds 1, in welchen sich eine zweite externe Abschlusseinheit 13b und eine zweite externe Recheneinheit 8b befinden können und welche analog zu der ersten externen Abschlusseinheit 13a bzw. der ersten Recheneinheit 8a ausgestaltet sein können. Im ersten Ausführungsbeispiel sind die Räumlichkeiten des ersten Mandanten von denen des zweiten Mandanten räumlich weit voneinander entfernt.

In Fig. 2 ist ein zweites Ausführungsbeispiel eines erfindungsgemäßen Rechnerverbunds 1 abgebildet. Der Einfachheit halber sind in Fig. 2 der Speicher 33 sowie die Reserveeinheiten 32 aus Fig. 1 nicht abgebildet worden. Stattdessen wurde in Fig. 2 die Verbindungstruktur 9 aus Fig. 1 beispielhaft dargestellt. Die Verbindungstruktur 9 des zweiten Ausführungsbeispiels umfasst mehrere Leaf Switches 14 sowie mehrere Spine Switches 16. In diesen Ausführungsbeispielen ist vorzugsweise jeder Leaf Switch 14 über eine Spine-Leaf-Verbindung 15 mit vorzugsweise jedem Spine-Switch 16 verbunden. Es ist bevorzugt, dass die Spine-Switches 16 auf der dritten Schicht (Vermittlungsschicht bzw. network layer) des OSI-Modells arbeiten.

Zweckmäßigerweise operieren die Leaf-Switches auf zweiten Schicht (Sicherungsschicht bzw. data link layer) des OSI-Modells.

Im zweiten Ausführungsbeispiel nach Fig. 2 umfasst der Rechnerverbund 1 ein erstes Teilnetz A, ein zweites Teilnetz B sowie ein Kryptogate 7. Das Kryptogate 7 weist bevorzugt eine Kryptokomponente 6 und/oder eine Netzwerkschnittstelle 34 auf. Das Kryptogate 7 ist vorzugsweise für das erste Teilnetz A und für das zweite Teilnetz B zuständig. Der Rechnerverbund 1 des zweiten Ausführungsbeispiels umfasst außerdem eine Kryptosteuerung 12 analog zum ersten Ausführungsbeispiel. Wie im Falle des ersten Ausführungsbeispiels ist das erste Teilnetz A einem ersten Mandanten und das zweite Teilnetz B einem zweiten Mandanten zugeordnet. Die Infrastruktur des ersten Mandanten und des zweiten Mandanten außerhalb des Rechnerverbunds 1 ist bei dem zweiten Ausführungsbeispiel dieselbe wie im Falle des ersten Ausführungsbeispiels.

Maßgeblicher Unterschied des zweiten Ausführungsbeispiels gegenüber dem ersten Ausführungsbeispiel ist, dass das Kryptogate 7 für das erste Teilnetz A und das zweite Teilnetz B zuständig ist, sodass vorzugsweise Datenströme des ersten Teilnetzes A und Datenströme des zweiten Teilnetzes B durch das Kryptogate 7 laufen.

Der Rechnerverbund 1 des zweiten Ausführungsbeispiels umfasst eine Abschlusseinheit 4. Die Abschlusseinheit 4 ist analog zu der ersten Abschlusseinheit 4a bzw. zweiten Abschlusseinheit 4b des ersten Ausführungsbeispiels ausgebildet. Zweckmäßigerweise ist die Abschlusseinheit 4 an die Netzwerkschnittstelle 34 des Kryptogates 7 angeschlossen. Die Netzwerkschnittstelle 34 ist vorzugsweise eine Ethernetschnittstelle.

Es bevorzugt, dass das Kryptogate 7 über die dem Kryptogate 7 zugeordnete Kryptokomponente 6 mit der Verbindungstruktur 9 verbunden ist. Eine bevorzugte Ausgangsverbindung 11 verbindet die Verbindungstruktur 9 mit dem Kryptogate 7 bzw. mit der Kryptokomponente 6 des Kryptogates 7 des zweiten Ausführungsbeispiels. Zweckmäßigerweise ist das Kryptogate 7 zwischen der Abschlusseinheit 4 und der Verbindungsstruktur 9 bzw. einer/der Ausgangsverbindung 11 bzw. der ersten Einheit 2a bzw. der zweiten Einheit 3a bzw. der dritten Einheit 2b bzw. der vierten Einheit 3b angeordnet.

Es ist sehr bevorzugt, dass jeder Einheit 2a, 3a, 2b, 3b des ersten Teilnetzes A bzw. zweiten Teilnetzes B ein Leaf-Switch und vorzugsweise lediglich ein Leaf-Switch 14 zugeordnet ist. In diesem Ausführungsbeispiel ist der Kryptosteuerung 12 ein Leaf-Switch 14 und vorzugsweise lediglich ein Leaf-Switch 14 zugeordnet. Zweckmäßigerweise ist dem Kryptogate 7 ein Leaf-Switch 14 und vorzugsweise lediglich ein Leaf-Switch 14 zugeordnet.

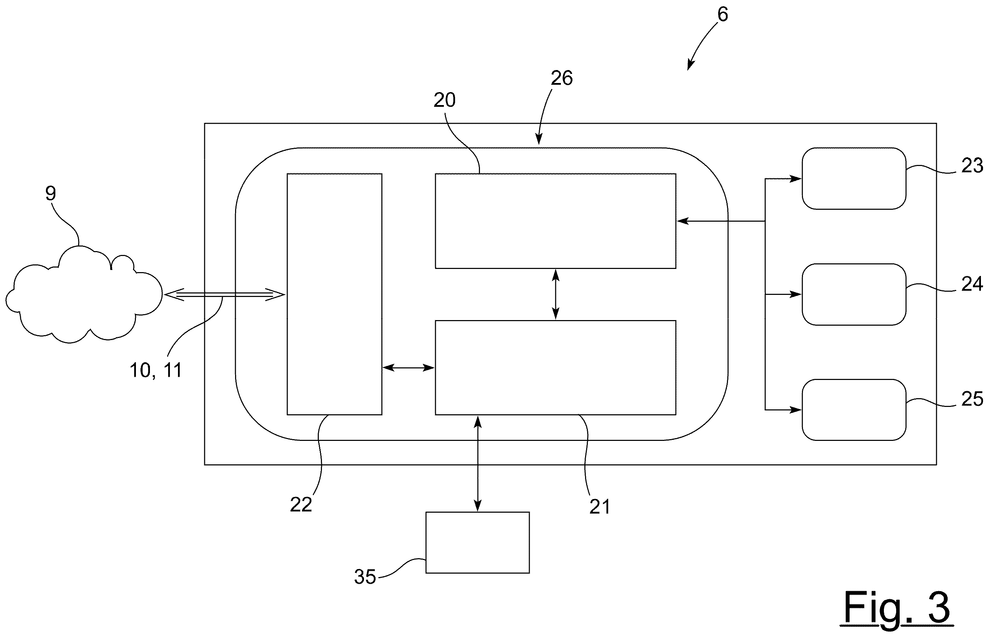

In Fig. 3 ist eine Kryptokomponente 6 beispielhaft dargestellt. Die Kryptokomponente 6 kommt sowohl bei dem ersten Ausführungsbeispiel als auch bei dem zweiten Ausführungsbeispiel zum Einsatz. Die Kryptokomponente 6 ist vorzugsweise als Data Processing Unit (DPU) ausgebildet. Bei der Kryptokomponente 6 handelt es sich beispielsweise um Produkte der Marke NVIDIA BlueField. Die Kryptokomponente 6 umfasst vorzugsweise eine Außenschnittstelle 22, eine Innenschnittstelle 21, einen Prozessor 20, eine Taktsignalquelle 23, einen Arbeitsspeicher 24 und/oder einen Dauerspeicher 25.

Der Prozessor 20 ist bevorzugt mit der Innenschnittstelle 21 verbunden. Der Prozessor 20 ist vorteilhafterweise als ARM-Prozessor (Advanced RISC machines) ausgebildet. Mit Vorteil ist die Innenschnittstelle 21, der Prozessor 20, die Taktsignalquelle 23, der Arbeitsspeicher 24 und/oder der Dauerspeicher 25 in einem integrierten Schaltkreis 26 untergebracht. Es ist möglich, dass die Innenschnittstelle 21 zwischen dem Prozessor und der Außenschnittstelle 22 angeordnet ist. Zweckmäßigerweise ist die Innenschnittstelle 21 zwischen dem Prozessor 20 und der inneren Komponente 35 angeordnet. Der Prozessor 20 ist vorzugsweise zwischen der Innenschnittstelle 21 und dem Speicher 24, 25 bzw. dem Arbeitsspeicher bzw. dem Dauerspeicher 25 angeordnet. Es ist sehr bevorzugt, dass der Prozessor 20 steuert, welche Daten bzw. Datenpakete bzw. Datenframes bzw. Datenströme die Innenschnittstelle 21 in Richtung innerer Komponente 35 bzw. in Richtung Außenschnittstelle 22 passieren.

Die Außenschnittstelle 22 ist vorzugsweise als Netzwerkschnittstelle und insbesondere als Ethernet-Netzwerkschnittstelle ausgebildet und kann beispielsweise dem Standard 25 GbE entsprechen. Die Außenschnittstelle 22 ist bevorzugt über eine Verbindung bzw. eine/die Endpunktverbindung 10 mit der Verbindungsstruktur 9 verbunden. Die Verbindung bzw. die Endpunktverbindung 10 ist vorteilhafterweise ein Kabel, insbesondere ein Netzwerkkabel und vorzugsweise ein Ethernet- oder InfiniBand-Kabel. Die Kryptokomponente 6 ist vorteilhafterweise ausgebildet, Daten von der Außenschnittstelle 22 zur Innenschnittstelle 21 und umgekehrt fließen zu lassen.

Die Innenschnittstelle 21 ist bevorzugt als PCI-Schnittstelle (*Peripheral Component Interconnect* -Schnittstelle) und weiter bevorzugt als PCI-Express-Schnittstelle ausgestaltet. Die Innenschnittstelle 21 ist mit Vorteil eine steckbare Schnittstelle und insbesondere eine männliche steckbare Schnittstelle. Die Innenschnittstelle 21 ist/wird vorzugsweise mit einer inneren Komponente 35 - insbesondere einem Mainboard - verbunden.

Die innere Komponente 35 kann Bestandteil einer Einheit 2a, 3a, 2b, 3b bzw. der ersten Einheit 2a bzw. der zweiten Einheit 3a bzw. der dritten Einheit 2b bzw. der vierten Einheit 3b sein. Die Kryptosteuerung 12, das Kryptogate 7, das erste Kryptogate 7a und/oder das zweite Kryptogate 7b kann/können (jeweils) eine innere Komponente 35 bzw. ein Mainboard aufweisen. Die Kryptokomponente 6 ist mit Vorteil von einem Gehäuse einer Einheit 2a, 3a, 2b, 3b bzw. bzw. der ersten Einheit 2a bzw. der zweiten Einheit 3a bzw. der dritten Einheit 2b bzw. der vierten Einheit 3b bzw. der Kryptosteuerung 12, des Kryptogates 7, des ersten Kryptogates 7a und/oder des zweiten Kryptogates 7b umgeben.

Zweckmäßigerweise umfasst die Kryptokomponente 6 bzw. der Dauerspeicher 25 ein eigenes Betriebssystem zum Betrieb der Kryptokomponente 6. Besonders vorzugsweise arbeitet die Kryptokomponente 6 unabhängig von der jeweils zugeordneten Einheit 2a, 3a, 2b, 3b. Vorzugsweise umfasst die Kryptokomponente 6 bzw. der Dauerspeicher 25 eine kryptographische Software. Bei der kryptographischen Software kann es sich beispielsweise um die Software HEAT (High Speed Encryption Acceleration Track) der Firma secunet handeln.

Es ist von besonderem Vorteil, dass die erste Einheit 2a bzw. die zweite Einheit 3a bzw. die dritte Einheit 2b bzw. die vierte Einheit 3b bzw. die Kryptosteuerung 12, dergestalt ausgebildet ist/sind, dass über die (jeweils) zugeordnete Kryptokomponente 6 ausnahmslos alle einströmenden und ausströmenden Daten fließen. Vorzugsweise ist/sind das Kryptogate 7, bzw. das erste Kryptogate 7a bzw. das zweite Kryptogate 7b ausgebildet, dass der Datenfluss zwischen dem Kryptogate 7, bzw. dem ersten Kryptogate 7a bzw. dem zweiten Kryptogate 7b und der Verbindungsstruktur stets über die (jeweils) zugeordnete Kryptokomponente 6 fließen muss.

Nachfolgend ist das Verfahren zur sicheren Separation der Mandanten etwas genauer beschrieben. Die Kryptosteuerung 12 ordnet vorzugsweise Reserveeinheiten 32 einem Teilnetz A, B zu. Es ist bevorzugt, dass das erste Teilnetz A teilnetzspezifisch verschlüsselt kommuniziert. Vorzugsweise kommuniziert das zweite Teilnetz B teilnetzspezifisch. Die teilnetzspezifische Verschlüsselung der Datenströme geschieht bevorzugt dergestalt, dass aus einer Einheit 2a, 2b, 3a, 3b ausgehende Datenströme zunächst die innere Komponente 35 verlassen und dann zweckmäßigerweise über die Innenschnittstelle 21 in die Kryptokomponente 6 eintreten. Dort werden die Datenströme bevorzugt zwangsweise teilnetzspezifisch verschlüsselt, sodass sie die Einheit 2a, 2b, 3a, 3b bzw. die Netzwerkschnittstelle 6 bzw. den Netzwerkadapter 22 teilnetzspezifisch verschlüsselt verlassen.

Die teilnetzspezifisch verschlüsselten Datenströme erreichen zweckmäßigerweise dann ein Zielgerät, was eine Einheit 2a, 3a, 2b, 3b oder das zugeordnete Kryptogate 7, 7a, 7b oder die Kryptosteuerung 12 sein kann. Dort entschlüsselt die jeweilige Kryptokomponente 6 die teilnetzspezifisch verschlüsselten Daten und leitet sie zu einer inneren Komponente 35 des jeweiligen Zielgeräts 2a, 3a, 2b, 3b, 7, 7a, 7b, 12 weiter. Auf diese Weise erfolgt die Kommunikation innerhalb eines Teilnetzes A, B teilnetzspezifisch verschlüsselt, sodass kompromittierte Einheiten innerhalb des Rechnerverbunds 1 ohne einen entsprechenden kryptographischen Schlüssel die Kommunikation des jeweiligen Teilnetzes A, B nicht entschlüsseln können. Entscheidend ist dabei, dass die Kryptokomponenten 6 unabhängig von ihren zugeordneten Einheiten 2a, 3a, 2b, 3b, 7, 7a, 7b sind und die Einheiten 2a, 3a, 2b, 3b, 7, 7a, 7b keinen steuernden Zugriff auf die jeweils zugeordnete Kryptokomponente 6 haben. Hierdurch kann eine durchgängig verschlüsselte, teilnetzspezifische Kommunikation gewährleistet werden, so dass selbst kompromittierte Einheiten 2a, 3a, 2b, 3b weder Daten ausleiten können und hierdurch eine sichere Mandantentrennung nach dem *Zero-Trust-Prinzip* erreicht wird.

Beispielsweise kann ein böswilliger Nutzer (etwa ein Spion eines anderen Landes) über den externen Arbeitsrechner 8b eine Schadsoftware in die *Cloud* bzw. in die dritte Einheit 2b hochladen. Die Schadsoftware ist dazu ausgebildet, Informationen aus dem Rechnerverbund 1 abzufangen, indem Trojaner von der dritten Einheit 2b ausgehend auf möglichst vielen anderen Einheiten 2a, 3a, 3b installiert werden. Im Falle der vierten Einheit 3b gelingt dies, weil die Einheiten 2b und 3b ohnehin innerhalb des Teilnetzes B miteinander kommunizieren. Allerdings hat der böswillige Nutzer aufgrund seines Zugriffs auf den externen Arbeitsrechner 8b ohnehin bereits einen Zugriff auf die vierte Einheit 3b, so dass die Infektion der vierten Einheit 3b über die Schadsoftware nicht viel bringt.

Aufgrund der teilnetzspezifischen Verschlüsselung von Teilnetz A kann die kompromittierte dritte Einheit 3b nicht mit den Einheiten 2a, 3a kommunizieren, so dass die Installation von Trojanern im Teilnetz A scheitert. Hierzu müsste die Schadsoftware in den Besitz der Schlüssel von Teilnetz A gelangen. Die Schlüssel des Teilnetzes A sind in diesem Ausführungsbeispiel symmetrisch ausgebildet sind und werden vorzugsweise in regelmäßigen oder unregelmäßigen zeitlichen Abständen, beispielsweise alle 60 Sekunden - vorzugsweise per VPN-Tunnel - von den Kryptokomponenten 6 innerhalb des Teilnetzes A geteilt. Beispielsweise die Einheit mit der kleinsten IP-Adresse des Teilnetzes A - in diesem Ausführungsbeispiel die zweite Einheit 3a - flutet alle 60 Sekunden das Teilnetz A per VPN-Tunnel mit einem neuen symmetrischen Schlüssel. Der Schlüssel wird bevorzugt im Dauerspeicher 25 der jeweiligen Kryptokomponenten 6 des Teilnetzes A hinterlegt und nach 60 Sekunden von einem anderen Schlüssel ersetzt.

Die Kryptokomponenten 6 sind vorzugsweise ausgebildet, nicht entsprechend dem aktuellen Schlüssel verschlüsselte Datenpakete bzw. Datenströme zu missachten bzw. zu löschen bzw. nicht zur inneren Komponente 35 durchzuleiten. Zudem sind die Kryptokomponenten 6 mit Vorteil so ausgebildet, dass sie keine eigene IP-Adresse aufweisen und insoweit transparent für IP-Sender - beispielsweise auch für die kompromittierte dritte Einheit 2b - sind. Die Kryptokomponenten 6 sind bevorzugt gehärtet ausgebildet. Die Kryptokomponenten umfassen vorzugsweise einen ARM-Prozessor.

Mit Blick auf Figur 1 ist festzustellen, dass zentrale Einheiten wie etwa die Kryptosteuerung 12 und der Speicher 33 keinem Teilnetz A, B angehören und daher auch keiner teilnetzspezifischen Verschlüsselung unterliegen. Diese zentralen Einheiten 12, 33 werden individuell durch hier nicht näher genannte Schutzmechanismen vor den kompromittierten Einheiten 2b, 3b geschützt. In diesem Ausführungsbeispiel genießen die Reserveeinheiten 32 weder einen individuellen Schutz wie die zentralen Einheiten 12, 33 noch sind sie einem verschlüsselten Teilnetz A, B unterworfen. Nichtsdestotrotz sind die Reserveeinheiten 32 passiv durch die teilnetzspezifische Verschlüsselung des kompromittierten Teilnetzes B geschützt. Denn die zwangsweise verschlüsselten Datenpakete umfassend einen Trojaner von der kompromittierten dritten Einheit 2b werden von der Kryptokomponente 6 der Reserveeinheit 32 nicht verstanden, da sie keinen Schlüssel des Teilnetzes B aufweist. In der Folge wird der Trojaner von der Kryptokomponente 6 der Reserveeinheit 32 nicht an eine innere Komponente 35 der Reserveeinheit 32 weitergeleitet. Doch selbst ein Befall der Reserveeinheit 32 durch den Trojaner wäre unkritisch, da die Reserveeinheiten 32 keinem Teilnetz A, B zugeordnet sind und daher auch keine sicherheitsrelevanten Daten enthalten.

Soll nun die Reserveeinheit 32 dem Teilnetz A zugeordnet werden, so bereinigt vorzugsweise der Rechnerverbund 1 bzw. die Kryptosteuerung 12 bzw. eine Einheit 2a, 3a des ersten Teilnetzes A alle Speicher der Reserveeinheit 32. Damit wird zugleich auch etwaige Schadsoftware entfernt. Während des Löschvorgangs bzw. bevorzugt unmittelbar danach wird mit Vorteil eine verschlüsselte Verbindung zwischen der Kryptosteuerung 12 bzw. der Einheit 2a, 3a und der Reserveeinheit 32 bzw. den beteiligten Kryptokomponenten 6 aufgebaut.

Dann wird zweckmäßigerweise die Reserveeinheit 32 neu gebootet, woraufhin vorteilhafterweise von der Kryptosteuerung 12 oder einer Einheit 2a, 3a des ersten Teilnetzes A die für das Teilnetz A bzw. den ersten Mandanten erforderlichen Anwendungen auf der Reserveeinheit 32 installiert werden. Damit ist aus der Reserveeinheit 32 eine weitere Einheit 4a des ersten Teilnetzes A geworden, ohne dass das kompromittierte Teilnetz B die Möglichkeit der Infektion des Teilnetzes A hatte.

Nicht bildlich dargestellt aber nachfolgend beschrieben ist ein Verfahren zur Einrichtung bzw. Initialisierung eines Teilnetzes A, B bzw. des ersten Teilnetzes A. In einem ersten Schritt wird zweckmäßigerweise eine Reserveeinheit 32 aus Fig. 1 - vorzugsweise durch die Kryptosteuerung 12 - initialisiert, wobei vorzugsweise alle Speicher der Reserveeinheit 32 bereinigt werden und vorteilhafterweise die Reserveeinheit 32 von der Kryptosteuerung 12 gebootet wird. Dann wird zweckmäßigerweise ein Programmpaket auf der Reserveeinheit 32 ausgerollt, so dass aus der Reserveeinheit 32 die erste Einheit 2a wird und das erste Teilnetz A entstanden ist. Dann können weitere Einheiten 3a, 4a wie oben beschrieben dem ersten Teilnetz hinzugefügt werden.

### Bezugszeichenliste

- 1: Rechnerverbund
- A: Erstes Teilnetz von 1
- B: Zweites Teilnetz von 1
- 2a: Erste Einheit (Teilnetz A)
- 3a: Zweite Einheit von (Teilnetz A)
- 4a: Weitere Einheit von (Teilnetz A)
- 2b: Dritte Einheit (Teilnetz B)
- 3b: Vierte Einheit (Teilnetz B)
- 4: Abschlusseinheit
- 4a: Erste Abschlusseinheit
- 4b: Zweite Abschlusseinheit
- 5: Externes Netzwerk
- 6: Kryptokomponente
- 7: Kryptogate
- 7a: Erstes Kryptogate
- 7b: Zweites Kryptogate
- 8a: Erste externe Recheneinheit
- 8b: Zweite externe Recheneinheit
- 9: Verbindungsstruktur von 1
- 10: Endpunktverbindung
- 11: Ausgangsverbindung
- 12: Kryptosteuerung
- 13a: Erste externe Abschlusseinheit
- 13b: Zweite externe Abschlusseinheit
- 14: Leaf-Switch von 9
- 15: Spine-Leaf-Verbindung von 9
- 16: Spine-Switch von 9
- 20: Prozessor von 6
- 21: Innenschnittstelle von 6
- 22: Außenschnittstelle von 6
- 23: Taktsignalquelle von 6
- 24: Arbeitsspeicher
- 25: Dauerspeicher
- 26: Integrierter Schaltkreis
- 30: Erste Kontrollschicht
- 31: Zweite Kontrollschicht
- 32: Reserveeinheit
- 33: Speicher
- 34: Netzwerkschnittstelle
- 35: Innere Komponente

## Patentansprüche

1. Verfahren zur sicheren Separation von Mandanten innerhalb eines Rechnerverbunds (1), wobei der Rechnerverbund (1) eine Mehrzahl an Einheiten (2a, 3a, 2b, 3b) umfasst, wobei eine erste Einheit (2a) - und vorzugsweise eine zweite Einheit (3a) - einem ersten Mandanten zugeordnet ist/sind und Bestandteil eines ersten Teilnetzes (A) ist/sind, wobei eine dritte Einheit (2b) einem zweiten Mandanten zugeordnet ist und Bestandteil eines zweiten Teilnetzes (B) ist, wobei wenigstens eine Datenverbindung (9, 10, 11, 14, 15, 16) innerhalb des Rechnerverbunds (1) zwischen dem ersten Teilnetz (A) und dem zweiten Teilnetz (B) vorliegt,
wobei von der ersten Einheit (2a) des ersten Teilnetzes (A) ausgehende Datenströme mit einem Schlüssel teilnetzspezifisch verschlüsselt sind, so dass die dritte Einheit (2b) des zweiten Teilnetzes (B) die teilnetzspezifisch verschlüsselten Datenströme des ersten Teilnetzes (A) ohne den Schlüssel des ersten Teilnetzes (A) nicht entschlüsseln kann, wobei die erste Einheit (2a) eine Kryptokomponente (6) zur teilnetzspezifischen Verschlüsselung des ersten Teilnetzes (A) aufweist, wobei die erste Einheit (2a) eine innere Komponente (35) umfasst,
**dadurch gekennzeichnet, dass**
die innere Komponente (35) hinsichtlich eines Datenflusses weiter innerhalb der ersten Einheit (2a) als die Kryptokomponente (6) angeordnet ist, wobei die Kryptokomponente (6) zum teilnetzspezifischen Verschlüsseln von einem aus der inneren Komponente (35) ausgehenden Datenstrom und zum teilnetzspezifischen Entschlüsseln von einem in die innere Komponente (35) eingehenden Datenstrom ausgebildet ist.

2. Verfahren nach Anspruch 1, wobei die Kryptokomponente (6) einen Speicher (24, 25) und/oder einen Prozessor (20) und/oder ein der Kryptokomponente (6) zugeordnetes Betriebssystem umfasst.

3. Verfahren nach einem der Ansprüche 1 oder 2, wobei die Kryptokomponente (6) ausgebildet ist, autonom gegenüber der inneren Komponente (35) bzw. anderen Komponenten der ersten Einheit (2a) zu arbeiten.

4. Verfahren nach einem der Ansprüche 1 bis 3, wobei die Kryptokomponente (6) bzw. der Speicher (24, 25) der Kryptokomponente (6) den Schlüssel für die teilnetzspezifische Verschlüsselung des ersten Teilnetzes (A) aufweist.

5. Verfahren nach einem der Ansprüche 1 bis 4, wobei die Kryptokomponente (6) die einzige Route darstellt, über die die erste Einheit (2a) von dem zweiten Teilnetz (B) bzw. der dritten Einheit (2b) ansprechbar ist.

6. Verfahren nach einem der Ansprüche 1 bis 5, wobei die Kryptokomponente (6) wenigstens eine Außenschnittstelle (22) und/oder wenigstens eine Innenschnittstelle (21) aufweist, wobei die Außenschnittstelle (22) vorzugsweise eine Netzwerkschnittstelle ist, wobei die Innenschnittstelle (21) zur bevorzugten Verbindung der Kryptokomponente (6) mit einer Platine ausgebildet ist und vorzugsweise eine PCI-Schnittstelle ist.

7. Verfahren nach einem der Ansprüche 1 bis 5, wobei der Schlüssel des ersten Teilnetzes (A) symmetrisch ist, wobei der Schlüssel vorzugsweise über einen Tunnel an die erste Einheit (2a) und/oder an die zweite Einheit (3a) und/oder an das wenigstens eine Kryptogate (7, 7a, 7b) verteilt wird, wobei bevorzugt ist, dass der Schlüssel des ersten Teilnetzes (A) - insbesondere in regelmäßigen Abständen - wiederholt geändert und verteilt wird.

8. Verfahren nach einem der Ansprüche 1 bis 7, wobei der Rechnerverbund (1) wenigstens ein Kryptogate (7, 7a, 7b) umfasst, wobei das Kryptogate (7, 7a, 7b) zwischen der ersten Einheit (2a) und einem externen Netzwerk (5) angeordnet ist.

9. Verfahren nach einem der Ansprüche 1 bis 8, wobei der Rechnerverbund (1) eine Kryptosteuerung (12) umfasst, wobei die Kryptosteuerung (12) vorzugsweise ausgebildet ist, die Kryptokomponente (6) zu authentifizieren und/oder ausgebildet ist, ein Teilnetz (A, B) zu initialisieren.

10. Computerprogramm zur sicheren Separation von Mandanten innerhalb eines Rechnerverbunds (1), insbesondere zur Durchführung eines Verfahrens nach einem der Ansprüche 1 bis 9, wobei das Computerprogramm ausgebildet ist, innerhalb eines Rechnerverbunds (1) umfassend eine Mehrzahl an Einheiten (2a, 3a, 2b, 3b) ausgeführt zu werden und zu definieren, dass eine erste Einheit (2a) umfassend eine innere Komponente (35) - und vorzugsweise eine zweite Einheit (3a) - einem ersten Mandanten zugeordnet ist/sind und Bestandteil eines ersten Teilnetzes (A) ist/sind,
wobei das Computerprogramm ausgebildet ist, von der ersten Einheit (2a) des ersten Teilnetzes (A) ausgehende Datenströme mit einem Schlüssel teilnetzspezifisch zu verschlüsseln, so dass eine dritte Einheit (2b) eines zweiten Teilnetzes (B) die teilnetzspezifisch verschlüsselten Datenströme des ersten Teilnetzes (A) ohne den Schlüssel des ersten Teilnetzes (A) nicht entschlüsseln kann, wobei das Computerprogramm ausgebildet ist, eine Komponente der ersten Einheit (2a) als Kryptokomponente (6) zur teilnetzspezifischen Verschlüsselung des ersten Teilnetzes (A) zu bestimmen,
**dadurch gekennzeichnet, dass**
das Computerprogramm ausgebildet ist, die Kryptokomponente (6) zu definieren, dass eine innere Komponente (35) der ersten Einheit (2a) hinsichtlich eines Datenflusses weiter innerhalb der ersten Einheit (2a) als die Kryptokomponente (2a) angeordnet ist, so dass die Kryptokomponente (6) zum teilnetzspezifischen Verschlüsseln von einem aus der inneren Komponente (35) ausgehenden Datenstrom und zum teilnetzspezifischen Entschlüsseln von einem in die innere Komponente (35) eingehenden Datenstrom ausgebildet ist.

11. Rechnerverbund (1) zur sicheren Separation von Mandanten innerhalb des Rechnerverbunds (1), insbesondere zur Durchführung eines Verfahrens nach einem der Ansprüche 1 bis 9, insbesondere umfassend ein Computerprogramm nach Anspruch 10, wobei der Rechnerverbund (1) eine Mehrzahl an Einheiten (2a, 3a, 2b, 3b) umfasst, wobei eine erste Einheit (2a) - und vorzugsweise eine zweite Einheit (3a) - einem ersten Mandanten zugeordnet ist/sind und Bestandteil eines ersten Teilnetzes (A) ist/sind, wobei eine dritte Einheit (2b) einem zweiten Mandanten zugeordnet ist und Bestandteil eines zweiten Teilnetzes (B) ist, wobei wenigstens eine Datenverbindung (9, 10, 11, 14, 15, 16) innerhalb des Rechnerverbunds (1) zwischen dem ersten Teilnetz (A) und dem zweiten Teilnetz (B) vorliegt,
wobei der Rechnerverbund ausgebildet ist, von der ersten Einheit (2a) des ersten Teilnetzes (A) ausgehende Datenströme mit einem Schlüssel teilnetzspezifisch zu verschlüsseln, so dass die dritte Einheit (2b) des zweiten Teilnetzes (B) die teilnetzspezifisch verschlüsselten Datenströme des ersten Teilnetzes (A) ohne den Schlüssel des ersten Teilnetzes (A) nicht entschlüsseln kann, wobei die erste Einheit (2a) eine Kryptokomponente (6) zur teilnetzspezifischen Verschlüsselung des ersten Teilnetzes (A) aufweist, wobei die erste Einheit (2a) eine innere Komponente (35) umfasst,
**dadurch gekennzeichnet, dass**
die innere Komponente (35) hinsichtlich eines Datenflusses weiter innerhalb der ersten Einheit (2a) als die Kryptokomponente (6) angeordnet ist, wobei die Kryptokomponente (6) zum teilnetzspezifischen Verschlüsseln von einem aus der inneren Komponente (35) ausgehenden Datenstrom und zum teilnetzspezifischen Entschlüsseln von einem in die innere Komponente (35) eingehenden Datenstrom ausgebildet ist.

12. Verwendung eines Computerprogramms nach Anspruch 10 bzw. eines Rechnerverbunds (1) nach Anspruch 11 innerhalb eines Rechenzentrums.
